(19) Europäisches Patentamt
European Patent Office
Office européen des brevets

(11) **EP 1 920 981 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(51) Int Cl.:
***B60T 8/172*** *(2006.01)*

(21) Anmeldenummer: **07119764.4**

(22) Anmeldetag: **31.10.2007**

(54) **Verfahren zum Ermitteln der von einem Fahrzeugreifen übertragenen Seitenkräfte oder Längskräfte mit einem sogenannten Reifenmodell**

Method for determining the lateral or longitudinal forces released by a vehicle tyre using a so-called tyre model

Procédé de détermination des forces latérales ou longitudinales transmises par un pneu de véhicule à l'aide d'un tel modèle de pneu

(84) Benannte Vertragsstaaten:
**DE FR GB IT NL SE**

(30) Priorität: **08.11.2006 DE 102006052624**

(43) Veröffentlichungstag der Anmeldung:
**14.05.2008 Patentblatt 2008/20**

(73) Patentinhaber: **Bayerische Motoren Werke Aktiengesellschaft**
**80809 München (DE)**

(72) Erfinder: **Ammann, Dario**
**80797 München (DE)**

(56) Entgegenhaltungen:
**EP-A- 1 207 090    WO-A-03/004330**
**DE-A1- 3 935 588    US-A1- 2005 154 513**
**US-B1- 6 549 842**

**Beschreibung**

Die Erfindung betrifft ein Verfahren zum Ermitteln der von einem Fahrzeugreifen übertragbaren Seitenkräfte oder Längskräfte mit einem sog. Reifenmodell, das unter Berücksichtigung der geschätzten oder geeignet ermittelten Radaufstandskraft (in Vertikalrichtung) zumindest einen applizierbaren Parameter enthält. Zum technischen Umfeld wird lediglich beispielshalber auf die DE 199 10 967 C1 verwiesen, wobei in dieser Schrift auf verschiedene bekannte Reifenmodelle, so bspw. dasjenige von Pacejka, kurz eingegangen wird.

Weitere bekannte Reifenmodelle sind in den Dokumenten US6549842, EP1207090, WO 03004330 und US 2005154513 offenbart

In der Fahrdynamik-Regelung von Kraftfahrzeugen finden Reifenmodelle Anwendung, um aus zur Verfügung stehenden Messgrößen und/oder daraus abgeleiteten physikalischen Größen in gewissen Fahrzuständen die von den Reifen bzw. radindividuell vom jeweiligen Reifen übertragbaren Seitenkräfte oder Längskräfte zu bestimmen. Die übertragbare Seitenkraft wird dabei für die Querdynamik des Fahrzeugs beeinflussende Regelprozesse und die übertragbare Längskraft für die Längsdynamik des Fahrzeugs beeinflussende Regelprozesse benötigt. Dabei sind bei Modellen generell und somit auch bei Reifenmodellen Kompromisse unvermeidbar, und zwar zwischen der gewünschten Genauigkeit des Modells, die sich in der Genauigkeit der Resultate widerspiegelt, und dem Aufwand, der für die Erzielung von Resultaten aus diesem Modell erforderlich ist. Neben der Anzahl und der Art von berücksichtigten Messgrößen und/oder physikalischen Größen spielt dabei auch die Anzahl der zu applizierenden, d.h. abzustimmenden Parameter eine Rolle.

Hiermit soll nun ein Reifenmodell bzw. ein Verfahren zum Ermitteln der von einem Fahrzeugreifen übertragbaren Seitenkräfte oder Längskräfte aufgezeigt werden, welches eine relativ hohe Genauigkeit bei einer relativ geringen Zahl von zu applizierenden Parametern aufweist, wobei mit einem im wesentlichen gleichen "Basis-Modell" unterschiedliche Genauigkeitsanforderungen erfüllt werden können, so dass unter Benutzung dieses Basis-Modells der Nutzer praktisch selbst bestimmen kann, wie hoch der zu erbringende Aufwand und demzufolge wie hoch die daraus resultierende Genauigkeit ist.

Zur Lösung dieser Aufgabe sind die Merkmale des einzigen Patentanspruchs mit den darin angegebenen einfachen Gleichungen vorgeschlagen.

Wie im bekannten Stand der Technik geht die sog. Radaufstandskraft, bei der es sich um die zwischen dem jeweiligen Fzg.-Rad und der (vorzugsweise) im wesentlichen horizontalen Fahrbahn in Vertikalrichtung übertragenen Kraft handelt, in das Reifenmodell ein. Dabei sollen verschiedene Möglichkeiten für die Abhängigkeit der mit dem Reifenmodell zu ermittelnden Seitenkraft oder Längskraft von einer Änderung der Radaufstandskraft gegeben sein. Weiterhin wird wie im bekannten Stand der Technik für die Ermittlung des Seitenkraft-Potentials, d.h. der übertragbaren Seitenkräfte, der aktuelle Schräglaufwinkel des Reifens im Reifenmodell berücksichtigt bzw. es wird für die Ermittlung des Längskraft-Potentials, d.h. der zwischen Reifen und Fahrbahn übertragbaren Längskräfte, der aktuelle Längsschlupf zwischen Reifen und Fahrbahn berücksichtigt.

Für das vorliegende Modell sind dabei sowohl die im weiteren mit $F_Z$ bezeichnete Radaufstandskraft als auch der mit $\alpha$ bezeichnete Schräglaufwinkel als auch der mit $\lambda$ bezeichnete Längsschlupf von extern vorgegebene, bspw. in einem anderen Rechenprogramm anhand von messbaren und bekannten Größen geeignet geschätzte Größen, auf deren Ermittlung daher nicht weiter einzugehen ist. Dies ist dem Fachmann grundsätzlich bekannt.

Bevorzugt ergibt sich also das zu ermittelnde Potential für die Seitenkraft $F_s$ wie folgt:

$$F_S = c_S \bullet f(F_Z) \bullet f(\alpha) \qquad \text{(Gleichung 1),}$$

wobei **"$c_s$"** ein zu applizierender sog. Quersteifigkeits-Parameter ist, während mit **"$f(F_Z)$"** bzw. mit **"$f(\alpha)$"** allgemein eine Funktion von der Radaufstandskraft $F_Z$ bzw. vom Schräglaufwinkel $\alpha$ bezeichnet ist, die verschiedene Möglichkeiten zur Berücksichtigung der Radaufstandskraft $F_Z$ bzw. des Schräglaufwinkels $\alpha$ bietet, und wobei das Zeichen "$\bullet$" für eine mathematische Multiplikation steht.

Vergleichbar ergibt sich bevorzugt das zu ermittelnde Potential für die Längskraft $F_L$ wie folgt:

$$F_L = c_L \bullet f(F_Z) \bullet f(\lambda) \qquad \text{(Gleichung 2),}$$

wobei **"$c_L$"** ein zu applizierender sog. Längssteifigkeits-Parameter ist, während mit **"$f(\lambda)$"** allgemein eine Funktion des Längsschlupfes $\lambda$ bezeichnet ist, die verschiedene Möglichkeiten zur Berücksichtigung dieses Längsschlupfes $\lambda$ bietet.

Bevorzugt bestehen die verschiedenen Möglichkeiten zur Berücksichtigung einer Änderung der Radaufstandskraft $F_Z$ darin, dass entweder eine im wesentlichen lineare Abhängigkeit (vgl. die folgende Gleichung **4**) der zur Verfügung stehenden Seitenkraft oder Längskraft von Änderungen Radauf-' standskraft gegeben ist, oder dass im Falle der soeben genannten linearen Abhängigkeit weiterhin (vgl. die folgende Gleichung **5**) die sog. Reifensättigung degressiv berücksichtigt wird, d.h. dass Berücksichtigung findet, dass bei betragsmäßig hohen Werten der Radaufstandskraft $F_Z$ das Seitenkraft-Potential $F_S$ bzw. das Längskraft-Potential $F_L$ mit weiter zunehmender Radaufstandskraft nicht mehr linear, sondern nur noch abgeschwächt zunimmt.

Werden Änderungen der Radaufstandskraft $F_Z$, die bspw. bzw. insbesondere aus mittels geeigneter Sensoren registrierbaren Wankbewegungen und/oder Nickbewegungen des Fahrzeug-Aufbaus resultieren, radindividuell berücksichtigt, so ist für $f(F_Z)$ der folgende Zusammenhang zu wählen:

$$f(F_Z) = F_Z \qquad \text{(Gleichung 4)}$$

Wenn darüber hinaus die sog., dem Fachmann bekannte Reifensättigung berücksichtigt werden soll, die bei intensiven Änderungen der Radlast eine Abnahme des Seitenkraft-Potentials oder Längskraft-Potentials hervorrufen kann und somit bezüglich des Potentials eine degressive Wirkung hat, so ist bevorzugt der folgende Zusammenhang zu wählen:

$$f(F_Z) = F_Z \,/\, (1 + (A \,/\, F_{Z0} \bullet (F_Z - F_{Z0}))^P \qquad \text{(Gleichung 5)},$$

wobei **A** und **P** zu applizierende Parameter für die Radaufstandskraft $F_Z$ sind, während das Zeichen "/" für eine mathematische Division, das Zeichen "+" für eine mathematische Addition sowie das Zeichen "-" für eine mathematische Subtraktion steht. Eine hochgestellte Ziffer bzw. ein hochgestelltes Symbol sind als mathematischer Exponent zu betrachten und die Zeichen "(", ")" stehen für die üblichen mathematischen Klammern.

Soweit zusammenfassend kann also eine der Gleichungen **(4, 5)** in die Gleichung **(1)** eingesetzt werden, wenn die übertragbare Seitenkraft $F_S$ mit verschiedenen Möglichkeiten zur Berücksichtigung sich ändernder Radaufstandskräfte $F_Z$ ermittelt werden soll, während eine der Gleichungen **(4, 5)** in die Gleichung **(2)** eingesetzt werden kann, um die übertragbare Längskraft $F_L$ mit verschiedenen Möglichkeiten zur Berücksichtigung sich ändernder Radaufstandskräfte $F_Z$ zu ermitteln.

Im weiteren wird nur mehr auf die Ermittlung der übertragbaren Seitenkraft $F_S$ (gemäß Gleichung **1**) eingegangen. Die verschiedenen Möglichkeiten zur Berücksichtigung der Schräglaufvinkel-Abhängigkeit können dann vorzugsweise darin bestehen, dass entweder (vgl. die folgende Gleichung **7**) die Sättigung des Seitenkraft-Potentials bezüglich des Schrägwinkel $\alpha$ berücksichtigt wird, oder dass bei Berücksichtigung der Sättigung zusätzlich zumindest der Reibwert $\mu$ zwischen Reifen und Fahrbahn berücksichtigt wird (vgl, die folgende Gleichung **8**) oder dass in einer Weiterbildung darüber hinaus die Koppelung zwischen dem Reibwert $\mu$ und dem Längsschlupf $\lambda$ (diese Koppelung ist dem Fachmann als "Kammscher Kreis" bekannt) in Form der Gleichungen **(9, 10)** berücksichtigt wird.

Wird die Sättigung bezüglich der übertragbaren Seitenkraft $F_S$ in Abhängigkeit vom Schräglaufwinkel $\alpha$ berücksichtigt, so kann der folgende Zusammenhang gewählt werden:

$$f(\alpha) = \alpha \,/\, (1 + (B \bullet abs(\alpha))^Q \qquad \text{(Gleichung 7)}$$

wobei **"abs"** den absoluten Betrag darstellt und **B** und **Q** zu applizierende Parameter für den Schräglaufwinkel.

Weiterhin kann bei Berücksichtigung der genannten Sättigung der übertragbaren Seitenkraft $F_S$ in Abhängigkeit vom Schräglaufwinkel $\alpha$ zusätzlich der Reibwert $\mu$ zwischen dem Reifen und der Fahrbahn berücksichtigt werden, der auch eine extern vorgegebene, bspw. in dem Fachmann bekannter Weise geeignet geschätzte Größe ist und auf dessen Ermittlung daher hier nicht weiter einzugehen ist. Dafür wird der folgende Zusammenhang vorgeschlagen:

$$f(\alpha) = \alpha \,/\, (1 + ((B \,/\, \mu) \bullet abs(\alpha))^Q \qquad \text{(Gleichung 8)}$$

Dabei sei darauf hingewiesen, dass im Betrieb des Fahrzeugs der Wert für den Reibwert $\mu$ in Abhängigkeit vom durch die Steuerelektronik festzustellenden Fahrverhalten des Fahrzeugs durchaus adaptiv, d.h. selbsttätig angepasst werden kann.

Schließlich kann die dem Fachmann als "Kammscher Kreis" bekannte Koppelung zwischen dem Reibwert $\mu$ und dem Längsschlupf $\lambda$ berücksichtigt werden, und zwar mit folgendem Zusammenhang:

$$f(a) = a / (1 + ((B / (\mu \bullet x)) \bullet abs(a))^{Q} \qquad \textbf{(Gleichung 9)}$$

mit

$$x = abs(a / a_{max}) / sqrt((a / a_{max})^2 + (\lambda / \lambda_{max})^2) \qquad \textbf{(Gleichung 10)},$$

wobei mit **"sqrt"** die mathematische Quadratwurzel-Funktion bezeichnet ist und $\alpha_{max}$ und $\lambda_{max}$ zu applizierende Parameter für die Berücksichtung des "Kammschen Kreises" sind.

Soweit zusammenfassend kann also eine der Gleichungen (**7, 8, 9**) in die Gleichung (**1**) eingesetzt werden, wenn die übertragbare Seitenkraft $F_S$ mit verschiedenen Möglichkeiten zur Berücksichtigung der Schräglaufwinkel-Abhängigkeit ermittelt werden soll, wobei bei Verwendung von Gleichung (**9**) in diese zuvor Gleichung (**10**) einzusetzen ist.

Im weiteren wird auf die Ermittlung der übertragbaren Längskraft $F_L$ (gemäß Gleichung **2**) eingegangen. Die verschiedenen Möglichkeiten zur Berücksichtigung der Längsschlupf-Abhängigkeit können dann vorzugsweise darin bestehen, dass entweder (vgl. die folgende Gleichung **12**) die Sättigung des Längskraft-Potentials bezüglich des Längsschlupfes $\lambda$ berücksichtigt wird, oder dass bei Berücksichtigung der Sättigung zusätzlich zumindest der Reibwert $\mu$ zwischen Reifen und Fahrbahn berücksichtigt wird (vgl. die folgende Gleichung **13**) oder dass in einer Weiterbildung darüber hinaus die Koppelung zwischen dem Reibwert $\mu$ und dem Längsschlupf $\lambda$ ( "Kammscher Kreis") in Form der Gleichungen (**14, 15**) berücksichtigt wird.

Wird die Sättigung bezüglich der übertragbaren Längskraft $F_L$ in Abhängigkeit vom Längsschlupf $\lambda$ berücksichtigt, so kann der folgende Zusammenhang gewählt werden:

$$f(\lambda) = \lambda / (1 + (C \bullet abs(\lambda))^{R} \qquad \textbf{(Gleichung 12)}$$

mit **C** und **R** als zu applizierende Parameter für den Längsschlupf $\lambda$.

Weiterhin kann bei Berücksichtigung der genannten Sättigung der übertragbaren Längskraft $F_L$ in Abhängigkeit vom Längsschlupf $\lambda$ zusätzlich der Reibwert $\mu$ zwischen dem Reifen und der Fahrbahn berücksichtigt werden. Dafür wird der folgende Zusammenhang vorgeschlagen:

$$f(\lambda) = \lambda / (1 + ((C / \mu) \bullet abs(\lambda))^{R} \qquad \textbf{(Gleichung 13)}$$

Darüber hinaus kann die dem Fachmann als "Kammscher Kreis" bekannte Koppelung zwischen dem Reibwert $\mu$ und dem Längsschlupf $\lambda$ berücksichtigt werden, und zwar mit folgendem Zusammenhang:

$$f(\lambda) = \lambda / (1 + ((C / (\mu \bullet y)) \bullet abs(\lambda))^{R} \qquad \textbf{(Gleichung 14)}$$

mit

$$y = abs(\lambda / \lambda_{max}) / sqrt((a / a_{max})^2 + (\lambda / \lambda_{max})^2) \qquad \textbf{(Gleichung 15)}.$$

Soweit zusammenfassend kann also eine der Gleichungen (**12, 13, 14**) in die Gleichung (**2**) eingesetzt werden, wenn die übertragbare Längskraft $F_L$ mit verschiedenen Möglichkeiten zur Berücksichtigung der Längsschlupf-Abhängigkeit ermittelt werden soll, wobei bei Verwendung von Gleichung (**14**) in diese zuvor Gleichung (**15**) einzusetzen ist.

Das vorgeschlagene Reifenmodell kann auf Grund seiner baukasten-artigen Struktur, d.h. dass wahlweise eine der Gleichungen (4, 5) und wahlweise eine der Gleichungen (7, 8, 9) bzw. eine der Gleichungen (12, 13, 14) herangezogen wird, einfach an unterschiedliche Anforderungen angepasst werden und benötigt dabei nur eine geringe, überschaubare Zahl von abzustimmenden, d.h. zu applizierenden Parametern, wobei noch darauf hingewiesen sei, dass durchaus eine Vielzahl von Details abweichend von obigen Erläuterungen gestaltet sein kann, ohne den Inhalt der Patentansprüche zu verlassen. Bspw. können mathematische Umformungen oder geringfügig andere Formeln vorgesehen sein oder ein Spezialfall anders als hier beschrieben behandelt oder berücksichtigt werden.

**Patentansprüche**

1.  Verfahren zum Ermitteln der von einem Fahrzeugreifen übertragbaren Seitenkräfte ($F_S$) oder Längskräfte ($F_L$) mit einem sog. Reifenmodell, das unter Berücksichtigung der geschätzten oder geeignet ermittelten Radaufstandskraft in Vertikalrichtung ($F_Z$) zumindest einen applizierbaren Parameter ($c_S$, $c_L$, A, P, B, Q, C, R) enthält,

    • wobei das Reifenmodell baukastenartig nach der weiter unten angegebenen Gleichung (1) für die Seitenkräfte ($F_S$) oder Gleichung (2) für die Längskräfte ($F_L$) aufgebaut ist und somit neben verschiedenen Möglichkeiten zur Berücksichtigung der Radaufstandskraft ($F_Z$) einen weiteren multiplikativen Term ($f(\alpha)$, $f(\lambda)$) enthält, der für die Ermittlung der Seitenkräfte ($F_S$) verschiedene Möglichkeiten zur Berücksichtigung der Schräglaufwinkel-Abhängigkeit ($f(\alpha)$)und für die Ermittlung der Längskräfte ($F_L$) verschiedene Möglichkeiten zur Berücksichtigung der Längsschlupf-Abhängigkeit ($f(\lambda)$)enthält,
    • wobei die verschiedenen Möglichkeiten zur Berücksichtigung einer Änderung der Radaufstandskraft ($F_Z$) darin bestehen, dass entweder eine im wesentlichen lineare Abhängigkeit der zur Verfügung stehenden Seitenkraft oder Längskraft von einer Änderung der Radaufstandskraft nach der weiter unten angegebenen Gleichung (4) gegeben ist, oder dass im Falle der linearen Abhängigkeit weiterhin die sog. Reifensättigung nach der weiter unten angegebenen Gleichung (5) degressiv berücksichtigt wird,
    • wobei die verschiedenen Möglichkeiten zur Berücksichtigung der Schräglaufwinkel-Abhängigkeit ($f(\alpha)$) darin bestehen, dass entweder nach der weiter unten angegebenen Gleichung (7) die Sättigung berücksichtigt wird oder dass bei Berücksichtigung der Sättigung zusätzlich der Kraftschlussbeiwert ($\mu$) zwischen Reifen und Fahrbahn nach Gleichung (8) oder in einer Weiterbildung darüber hinaus die Koppelung zwischen Kraftschlussbeiwert ($\mu$) und Längsschlupf ($\lambda$) nach den weiter unten angegebenen Gleichungen (9, 10) berücksichtigt wird,
    • wobei die verschiedenen Möglichkeiten zur Berücksichtigung der Längsschlupf-Abhängigkeit ($f(\lambda)$) darin bestehen, dass entweder nach der weiter unten angegebenen Gleichung (12) die Sättigung berücksichtigt wird, oder dass bei Berücksichtigung der Sättigung zusätzlich der Kraftschlussbeiwert ($\mu$) zwischen Reifen und Fahrbahn nach Gleichung (13) oder in einer Weiterbildung darüber hinaus die Koppelung zwischen Kraftschlussbeiwert ($\mu$) und Längsschlupf ($\lambda$) nach den weiter unten angegebenen Gleichungen (14, 15) berücksichtigt wird,
    • wobei die oben genannten Gleichungen

    mit $c_S$ als ein Quersteifigkeits-Parameter, mit $c_L$ als ein Längssteifigkeits-Parameter,
    mit **$F_{Z0}$** als radindividueller konstanter Reifenaufstandskraft,
    mit $\alpha$ als Schräglaufwinkel,
    mit **"abs"** als absolutem Betrag, und
    mit **"sqrt"** als mathematischer Quadratwurzel-Funktion.
    wie folgt lauten:

$$\textbf{(Gleichung 1)} \qquad F_S = c_S \bullet f(F_Z) \bullet f(\alpha)$$

$$\textbf{(Gleichung 2)} \qquad F_L = c_L \bullet f(F_Z) \bullet f(\lambda)$$

$$\textbf{(Gleichung 4)} \qquad f(F_Z) = F_Z$$

**(Gleichung 5)** $\quad f(F_Z) = F_Z / (1 + (A / F_{Z0} \bullet (F_Z - F_{Z0}))^P$

**(Gleichung 7)** $\quad f(\alpha) = \alpha / (1 + (B \bullet abs(\alpha))^Q$

**(Gleichung 8)** $\quad f(\alpha) = \alpha / (1 + ((B / \mu) \bullet abs(\alpha))^Q$

**(Gleichung 9)** $\quad f(\alpha) = \alpha / (1 + ((B / (\mu \bullet x)) \bullet abs(\alpha))^Q$

**(Gleichung 10)** $\quad x = abs(\alpha / \alpha_{max}) / sqrt((\alpha / \alpha_{max})^2 + (\lambda / \lambda_{max})^2)$

**(Gleichung 12)** $\quad f(\lambda) = \lambda / (1 + (C \bullet abs(\lambda))^R$

**(Gleichung 13)** $\quad f(\lambda) = \lambda / (1 + ((C / \mu) \bullet abs(\lambda))^R$

**(Gleichung 14)** $\quad f(\lambda) = \lambda / (1 + ((C / (\mu \bullet y)) \bullet abs(\lambda))^R$

**(Gleichung 15)** $\quad y = 1 \text{ oder } y = abs(\lambda / \lambda_{max}) / sqrt((\alpha / \alpha_{max})^2 + (\lambda / \lambda_{max})^2)$

## Claims

1. A method for determining the lateral forces ($F_S$) or longitudinal forces ($F_L$) which can be transmitted by a vehicle tyre using a so-called tyre model, which, taking into account the estimated or suitably determined wheel contact force in the vertical direction ($F_Z$), contains at least one applicable parameter ($c_S$, $c_L$, A, P, B, Q, C, R),

   • wherein the tyre model is constructed in a modular manner according to equation (1) given below for the lateral forces ($F_S$) or equation (2) for the longitudinal forces ($F_L$) and thus, in addition to various possibilities for taking into account the wheel contact force ($F_Z$), contains a further multiplicative term ($f(\alpha)$, $f(\lambda)$), which, for the determination of the lateral forces ($F_S$) contains various possibilities for taking account the slip angle dependency ($f(\alpha)$) and, for the determination of the longitudinal forces ($F_L$), contains various possibilities for taking into account the longitudinal slip dependency ($f(\lambda)$),
   • wherein the various possibilities for taking into account a change in the wheel contact force ($F_Z$) comprise in that either a substantially linear dependency of the available lateral force or longitudinal force on a change in the wheel contact force according to equation (4) given below is provided or in that, in the case of the linear dependency, the so-called tyre saturation is degressively also taken into account according to equation (5) given below,
   • wherein the various possibilities for taking into account the slip angle dependency ($f(\alpha)$) comprise in that either the saturation is taken into account according to equation (7) given below or in that in taking into account the saturation, the coefficient of non-positive engagement ($\mu$) between the tyre and road is additionally taken into account according to equation (8) or, in a development, the coupling between the coefficient of non-positive engagement ($\mu$) and longitudinal slip (A) is also taken into account according to equations (9, 10) given below,
   • wherein the various possibilities for taking into account the longitudinal slip dependency ($f(\lambda)$) comprise in that either the saturation is taken into account according to equation (12) given below, or in that in taking into account the saturation, the coefficient of non- positive engagement ($\mu$) between the tyre and road is also taken into account according to equation (13) or, in a development, the coupling between the coefficient of non-positive engagement ($\mu$) and longitudinal slip ($\lambda$) is moreover taken into account according to equations (14, 15) given below,

• wherein the aforementioned equations,

with $c_S$ as a transverse rigidity parameter,

with $c_L$ as a longitudinal rigidity parameter,

with $F_{Z0}$ as an individual wheel constant tyre contact force,

with $\alpha$ as a slip angle,

with "abs" as the absolute amount, and

with "sqrt" as the mathematical square root function,

are as follows:

$$(1) \qquad F_S = c_S \bullet f(F_Z) \bullet f(\alpha)$$

$$(2) \qquad F_L = c_L \bullet f(F_Z) \bullet f(\lambda)$$

$$(4) \qquad f(F_Z) = F_Z$$

$$(5) \qquad f(F_Z) = F_Z / (1 + (A / F_{Z0} \bullet (F_Z - F_{Z0}))^P$$

$$(7) \qquad f(\alpha) = \alpha / (1 + (B \bullet abs(\alpha))^Q$$

$$(8) \qquad f(\alpha) = \alpha / (1 + ((B / \mu) \bullet abs(\alpha))^Q$$

$$(9) \qquad f(\alpha) = \alpha / (1 + ((B / (\mu \bullet x)) \bullet abs(\alpha))^Q$$

$$(10) \qquad x = abs(\alpha / \alpha_{max}) / sqrt((\alpha / \alpha_{max})^2 + (\lambda / \lambda_{max})^2)$$

$$(12) \qquad f(\lambda) = \lambda / (1 + (C \bullet abs(\lambda))^R$$

$$(13) \qquad f(\lambda) = \lambda / (1 + ((C / \mu) \bullet abs(\lambda))^R$$

$$(14) \qquad f(\lambda) = \lambda / (1 + ((C / (\mu \bullet y)) \bullet abs(\lambda))^R$$

$$(15) \qquad y = 1 \text{ or } y = abs(\lambda / \lambda_{max}) / sqrt((\alpha / \alpha_{max})^2 + (\lambda / \lambda_{max})^2)$$

**Revendications**

1. Procédé pour déterminer les forces latérales ($F_S$) ou les forces longitudinales ($F_L$) transmises par un pneumatique de véhicule, à l'aide d'un modèle de pneumatique comportant au moins un paramètre d'application ($c_S$, $c_L$, A, P, B, Q, C, R), en tenant compte de la force d'appui de roue dans la direction verticale (Fz), force évaluée ou déterminée de manière appropriée,

• le modèle de pneumatique est construit à la manière d'un jeu de construction selon l'équation (1) donnée ultérieurement pour les forces latérales (Fs) ou l'équation (2) pour les forces longitudinales ($F_L$), et comportant ainsi en plus de différentes possibilités de prise en compte de la force d'appui de roue (Fz), un autre terme multiplicateur ($f(\alpha)$, $f(\lambda)$), et pour déterminer les forces latérales (Fs), offre différentes possibilités de prise en compte de la fonction d'angle de marche en biais ($f(\alpha)$) et pour déterminer les forces longitudinales ($F_L$), différentes possibilités de tenir compte de la fonction de patinage longitudinal ($f(\lambda)$),

• les différentes possibilités pour tenir compte d'une variation de la force d'appui de roue (Fz) consistent à tenir compte d'une fonction essentiellement linéaire de la force latérale ou de la force longitudinale disponible pour la variation de la force d'appui de roue selon une autre équation (4) donnée ci-après, ou en cas de fonction linéaire, on continue de tenir compte de la saturation du pneumatique selon une autre équation (5) donnée ultérieurement,

• les différentes possibilités de prise en compte de la fonction d'angle de marche en biais ($f(\alpha)$) consistent à tenir compte de la saturation selon l'équation (7) donnée ultérieurement soit, de la saturation, en tenant en outre compte du coefficient d'adhérence ($\mu$) entre les pneumatiques et la chaussée selon l'équation (8) soit, selon un autre développement, le couplage entre le coefficient d'adhérence ($\mu$) et le patinage longitudinal ($\lambda$) selon les autres équations (9, 10) données ultérieurement,

• les différentes possibilités de prise en compte de la fonction de patinage longitudinal ($f(\lambda)$) consistent à tenir compte soit selon une équation (12) donnée ultérieurement de la saturation soit, de la saturation et en plus du coefficient d'adhérence ($\mu$) entre les pneumatiques et la chaussée selon l'équation (13) ou selon un autre développement, le couplage entre le coefficient d'adhérence ($\mu$) et le patinage longitudinal ($\lambda$), selon d'autres équations (14, 15) données ultérieurement,

• et dans les équations ci-dessus,

$c_S$ désigne un paramètre de raideur transversale,

$c_L$ désigne un paramètre de raideur longitudinale,

Fzo désigne la force d'appui pneumatique, constante, individuelle par roue,

$\alpha$ désigne l'angle de marche en biais,

abs désigne une valeur absolue, et

sqrt désigne la racine carrée mathématique,

les équations s'écrivant comme suit :

$$1) \quad F_S = c_S \bullet f(F_Z) \bullet f(\alpha)$$

$$2) \quad F_L = c_L \bullet f(F_Z) \bullet f(\lambda)$$

$$4) \quad f(F_Z) = F_Z$$

$$5) \quad f(F_Z) = F_Z \, / \, (1 + (A \, / \, F_{Z0} \bullet (F_Z - F_{Z0}))^P$$

$$7) \quad f(\alpha) = \alpha \, / \, (1 + (B \bullet abs(\alpha))^Q$$

$$8) \quad f(\alpha) = \alpha \, / \, (1 + ((B \, / \, \mu) \bullet abs(\alpha))^Q$$

$$9) \quad f(\alpha) = \alpha \, / \, (1 + ((B \, / \, (\mu \bullet x)) \bullet abs(\alpha))^Q$$

$$10) \quad x = abs(\alpha \, / \, \alpha_{max}) \, / \, sqrt((\alpha \, / \, \alpha_{max})^2 + (\lambda \, / \, \lambda_{max})^2)$$

12)  $f(\lambda) = \lambda \,/\, (1 + (C \bullet \mathrm{abs}(\lambda))^R$

13)  $f(\lambda) = \lambda \,/\, (1 + ((C \,/\, \mu) \bullet \mathrm{abs}(\lambda))^R$

14)  $f(\lambda) = \lambda \,/\, (1 + ((C \,/\, (\mu \bullet y)) \bullet \mathrm{abs}(\lambda))^R$

15) · $y = 1$ ou $y = \mathrm{abs}(\lambda \,/\, \lambda_{max}) \,/\, \mathrm{sqrt}((\alpha \,/\, \alpha_{max})^2 + (\lambda \,/\, \lambda_{max})^2)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19910967 C1
- US 6549842 B
- EP 1207090 A
- WO 03004330 A
- US 2005154513 A